# EUROPÄISCHE PATENTSCHRIFT

(11) **EP 4 680 476 B1**
(45) Veröffentlichungstag und Bekanntmachung des Hinweises auf die Patenterteilung: **21.10.2026**
(21) Anmeldenummer: 24706675.6
(22) Anmeldetag: 15.02.2024
(51) Int. Cl.: B60K 35/10, B60K 35/22, B60K 35/26, B60K 35/28

(54) **ANWENDERSCHNITTSTELLE, FORTBEWEGUNGSMITTEL UND VERFAHREN ZUR GESTALTUNG EINER GRAPHISCHEN ANWENDERSCHNITTSTELLE DURCH EINEN ANWENDER**
USER INTERFACE, MEANS OF TRANSPORTATION AND METHOD OF DESIGNING A GRAPHICAL USER INTERFACE BY A USER
INTERFACE UTILISATEUR, MOYEN DE TRANSPORT ET PROCÉDÉ DE CONCEPTION D'UNE INTERFACE GRAPHIQUE UTILISATEUR PAR UN UTILISATEUR

(30) Priorität: 14.03.2023 DE 102023202302
(43) Veröffentlichungstag der Anmeldung: 21.01.2026
(73) Patentinhaber: VOLKSWAGEN AKTIENGESELLSCHAFT, 38440 Wolfsburg (DE)
(72) Erfinder: WYSZKA, Robert Jan, 30165 Hannover (DE); VIEIRA, Eduardo Luiz, 10117 Berlin (DE); HOPPEN, Franziska, 39104 Magdeburg (DE); BRETZ, Janine, 38122 Braunschweig (DE)
(86) Internationale Anmeldenummer: PCT/EP2024/053830
(87) Internationale Veröffentlichungsnummer: WO 2024/188581

(56) Entgegenhaltungen:
- EP-B1- 2 769 883
- EP-B1- 3 078 559
- DE-A1- 102018 216 409

## Beschreibung

Die vorliegende Erfindung betrifft ein Fortbewegungsmittel, eine Anwenderschnittstelle sowie ein Verfahren zur Gestaltung einer graphischen Anwenderschnittstelle eines Fortbewegungsmittels. Insbesondere betrifft die vorliegende Erfindung eine einfache und ergonomische sowie unterhaltsame Individualisierung einer graphischen Anwenderschnittstelle mit einem Bildschirm (Matrixanzeige).

Fortbewegungsmittel werden im Stand der Technik mit immer mehr Displayfläche im Innenraum versehen. Gestaltungen, ergonomische Anpassungen und Funktionserweiterungen können in weitem Rahmen durch die Anwender vorgenommen werden. Beispielsweise können sogenannte Homescreens bzw. in diesen enthaltene Kacheln verschoben, mit anderen Funktionsumfängen oder Anzeigeumfängen befüllt oder Farbschemata für die Anzeigen ausgewählt werden.

Die im Stand der Technik bekannten Varianten schöpfen die technischen Möglichkeiten indes nicht vollständig aus. Insbesondere kann eine als solches klar erkennbare Individualisierung nicht ohne Weiteres vorgenommen werden. Insbesondere kann ein Anwender/Insasse eines Fortbewegungsmittels nicht mittels des Infotainmentsystems bei einem solchen Schritt unterstützt werden.

DE 10 2018 216 409 A1 beschreibt ein Verfahren, eine Vorrichtung sowie ein Fortbewegungsmittel. In einem ersten Schritt wird eine Lage und/oder eine Beschleunigung eines Fortbewegungsmittels ermittelt. Abhängig von der Lage und/oder der Beschleunigung des Fortbewegungsmittels sowie eventuell von der Insassenidentität, der Blickrichtung des Insassen, der Anwesenheit eines Insassen auf einem Sitzplatz, der Tätigkeit eines Insassen und einer Eingabe des Insassen, wird in einem zweiten Schritt eine Bewegtbildsequenz erzeugt, welche eine virtuelle Flüssigkeit realitätsnah darstellt. Die Bewegtbildsequenz wird in einem dritten Schritt von der Insassenidentität, der Blickrichtung des Insassen, der Anwesenheit eines Insassen auf einem Sitzplatz, der Tätigkeit eines Insassen und einer Eingabe des Insassen abhängig, auf einem oder mehreren Displays des Fortbewegungsmittels angezeigt.

DE 10 2012 009 024 A1 zeigt eine Anzeigeeinrichtung eines Fahrzeugs, die aus maximal drei verschiedenen graphischen Elementen besteht. Das erste Element ist ein Linienzug der in Analogie zu einem Elektro-Kardiogramm die Abfahrbereitschaft des Fahrzeugs mithilfe einer Darstellung bzw. Veranschaulichung eines Oszillationsparameters, mit variabler Frequenz und Amplitude, aber ohne tatsächliche virtuelle bzw. graphische Schwingung, anzeigt. Das zweite Element stellt ein dreidimensionales Objekt dar, das sich in Abhängigkeit des Bewegungszustands des Fahrzeugs, beispielsweise einer Geschwindigkeit, einer Beschleunigung oder eines Lenkereinschlagwinkels, verändert, sich beispielsweise längt oder krümmt. Das dritte Element ist die Darstellung eines gerasterten virtuellen Bodens der sich analog zum tatsächlichen Bewegungszustand des Fahrzeugs, beispielsweise einer Geschwindigkeit oder einer Beschleunigung, bewegt.

EP 3 078 559 B1 offenbart ein Verfahren zur Verbesserung des Kraftfahrzeug-Fahrerbewusstseins über den Proximitätsgrad des Kraftfahrzeugs zu einer Kraftfahrzeugstraßenlagengrenze während des sportlichen Fahrens, wozu ein zweidimensionales Anzeigefeld G-Kräfte auf einen Bildschirm anzuzeigen vermag.

EP 2 769 883 B1 offenbart eine Hilfsvorrichtung zum Führen eines Fahrzeugs, bei welchem Bewegungszustände auf einem Display durch Veranschaulichung von Radabrollzuständen angezeigt werden.

Ausgehend vom vorgenannten Stand der Technik ist es eine Aufgabe der vorliegenden Erfindung, die vorgenannten Nachteile des Standes der Technik zu lindern bzw. zu beheben. Die vorgenannte Aufgabe wird erfindungsgemäß durch ein Verfahren mit den Merkmalen gemäß Anspruch 1, eine Anwenderschnittstelle mit den Merkmalen gemäß Anspruch 14 und ein Fortbewegungsmittel mit den Merkmalen gemäß Anspruch 15 gelöst. Die Unteransprüche zeigen bevorzugte Weiterbildungen der Erfindung.

Das Verfahren dient der Gestaltung einer graphischen Anwenderschnittstelle, welche eine Matrixanzeige (z.B. ein frei programmierbares Kombiinstrument, ein zentrales Informationsdisplay, eine zentrale Anzeigebedieneinheit o.ä.) umfasst. Diese vorgenannten Elemente sind in die graphische Anwenderschnittstelle des Fortbewegungsmittels integriert bzw. sind zur Bereitstellung der graphischen Anwenderschnittstelle hardwaretechnisch vorgesehen. Das Fortbewegungsmittel kann als PKW, Transporter, Motorrad, LKW, Luft- und/oder Wasserfahrzeug ausgestaltet sein. In einem ersten Schritt wird ein virtuell schwingfähiges Element, welches nachfolgend auch als "Schwinger" bezeichnet wird, auf einer Anwenderschnittstelle dargestellt. Die Anwenderschnittstelle kann somit den Schwinger mittels der Matrixpixel visualisieren. Dieser Schritt kann in einem Konfigurationsmodus für die graphische Anwenderschnittstelle erfolgen. Insbesondere kann der Schritt der Darstellung bereits während des Konfigurationsmodus ausgeführt werden. In einem zweiten Schritt wird eine Anwendereingabe detektiert bzw. ermittelt, welche eine Zielposition auf der graphischen Anwenderschnittstelle repräsentiert. Mit anderen Worten bestimmt der Anwender mittels der Anwendereingabe diejenige Position, an welcher der Schwinger zukünftig "virtuell" angebracht sein soll. Beispielsweise kann der Anwender hierzu im Konfigurationsmodus die Zielposition antippen oder eine Wischgeste auf der gewünschten Zielposition enden lassen. Im Ansprechen darauf kann das Platzieren des Schwingers an der Zielposition erfolgen. Je nach Anwendereingabe bzw. Anwendergeste zur Definition der Zielposition kann der Schwinger aus einer Startposition an die Zielposition "fliegen" oder "wandern". Anders ausgedrückt kann der Schwinger in einem virtuell von der Oberfläche der graphischen Anwenderschnittstelle erhabenen Bogen oder unter virtuellem Kontakt mit der graphischen Anwenderschnittstelle an die Zielposition gelangen. Beispielsweise durch Abheben des Fingers des Anwenders von der graphischen Anwenderschnittstelle kann die Zielposition fixiert werden, im Ansprechen worauf einerseits der Schwinger an der Zielposition angeordnet ist, andererseits der Konfigurationsmodus optional automatisch verlassen wird und die übrigen Elemente der graphischen Anwenderschnittstelle wieder bedienbar werden und/oder in einem Anzeige- und/oder Bedienmodus erscheinen. Beispielsweise kann während des Konfigurationsmodus' die graphische Anwenderschnittstelle überwiegend unscharf bzw. durch eine Schublade, eine Ansicht oder ein Fenster (nachfolgend "Tray" genannt) überlagert werden, welches den Schwinger und/oder eine Vielzahl von (gegebenenfalls unterschiedlichen) Schwingern aufweist. Dieses Tray kann grundsätzlich auch auf einem Smart Device, Mobile Device, tragbaren Anwenderendgerät o.ä. dargestellt werden. Wichtig ist lediglich eine zuordenbare Auswahl des Schwingers und eine hinreichend exakte Definition der Zielposition, sodass der Schwinger aus dem Tray (wo auch immer angeordnet) in der graphischen Anwenderschnittstelle des Fortbewegungsmittels positioniert werden kann.

In einem nächsten Schritt wird ein Signal repräsentierend eine Beschleunigung und/oder eine Vibration des Fortbewegungsmittels ermittelt. Dies kann beispielsweise durch Beschleunigungssensoren des Fortbewegungsmittels erfolgen. Alternativ oder zusätzlich können von einem Smart Device des Anwenders mitgeführte Beschleunigungssensoren verwendet werden. Im Ansprechen auf den Empfang des Signals sowie in Abhängigkeit der Natur / Charakteristik des Signals wird eine Schwingung des Schwingers animiert. Der Schwinger selbst bringt eine vordefinierte virtuelle physikalische Beschaffenheit mit, welche beispielsweise durch eine Pendellänge, eine Rückstellkraft oder andere physikalische Parameter definiert sein kann. Beispielsweise kann auch die virtuelle Schnur, mittels welcher der Schwinger auf der graphischen Anwenderoberfläche befestigt wird, elastisch und/oder massebehaftet / masselos ausgestaltet sein. Durch die Ansteuerung des Schwingers mittels des Signals kann der Anwender eine Rückmeldung über den Bewegungszustand des Fahrzeugs erhalten, wodurch Kinetose vorgebeugt werden kann. In erfindungsgemäßer Weise kann der Anwender sowohl den Schwinger als auch dessen Position frei konfigurieren, so dass sich eine besonders anwenderfreundliche und ästhetisch den Anwenderwünschen entsprechende Darstellung ergibt. Gegenüber im Stand der Technik bekannten Anordnungen zur Individualisierung eines Bildschirms einer Anwenderschnittstelle eines Fortbewegungsmittels ist der erfindungsgemäße Schwinger klar als inhaltlich außerhalb der Funktion der übrigen Anwenderschnittstelle liegend erkennbar. Insbesondere hat der Schwinger keine Bedienfunktion, welche sich auf das Auslösen einer Fahrzeugfunktion oder einen Fahrzeugaktuator auswirkt. Vielmehr ist der Schwinger ein im Wesentlichen passives Element, welches über die Kinetosevermeidung hinaus als Retro-Individualisierungs-Element ausgestaltet und bezeichnet werden kann. Auf diese Weise kann vermieden werden, dass tatsächlich im Fortbewegungsmittel in Hardware angeordnete Schwinger zur Kinetosevermeidung im Crash-Fall gegebenenfalls zur Gefahrenquelle werden oder irreversible Schäden zur Befestigung des Schwingers am Interieur des Fortbewegungsmittels verursacht werden.

Bevorzugt kann der Anwender die vorgenannte Individualisierung starten, indem ein Konfigurationsmodus explizit initiiert wird. Mit anderen Worten kann der Anwender das vorgenannte Tray durch Ausführen einer vordefinierten Geste, durch Aufruf des Konfigurationsmodus per Sprachkommando und/oder mittels seines Smart Devices oder anders starten. In einem zweiten Schritt wird das Tray auf einem Bildschirm dargestellt und eine Aufnahme-Anwendereingabe (Auswahlgeste) bezüglich eines im Tray dargestellten Schwingers ermittelt. Mit anderen Worten wird der Anwenderwunsch sensortechnisch ermittelt, einen gewünschten Schwinger aus dem Tray zu entnehmen. Beispielsweise kann der Anwender hierzu eine Tippgeste auf den Schwinger ausführen oder eine Wischgeste auf dem Schwinger starten. Anschließend kann der entnommene Schwinger wie oben beschrieben an seine Zielposition verbracht werden.

Bevorzugt wird die Entnahme des Schwingers aus dem Tray dadurch optisch und/oder akustisch quittiert, dass eine Positionsveränderung des Schwingers gegenüber dem Tray und/oder eine optische Vergrößerung des Schwingers und/oder eine Vergrößerung einer Entfernung eines virtuellen Schattens des Schwingers vom Schwinger selbst und/oder eine Schwingung und/oder Rotation/Schrägstellung des Schwingers und/oder ein Abspielen einer Animation bezüglich des Schwingers erfolgt. Auf diese Weise kann dem Anwender eine Rückmeldung darüber gegeben werden, welcher Schwinger ausgewählt und zur Platzierung an einer Zielposition vorbereitet worden ist.

Insbesondere kann das Entnehmen des Schwingers, bevorzugt bereits das Aufrufen des Konfigurationsmodus' dadurch begleitet sein, dass die graphische Anwenderschnittstelle des Fortbewegungsmittels für anderweitige Eingaben "taub" geschaltet wird. Mit anderen Worten können Anwendereingaben an bestimmten Positionen bis zur erfolgreichen Platzierung des Schwingers und/oder bis zum Abbruch des erfindungsgemäßen Individualisierungsvorgangs nicht bedient werden, um unerwünschte Eingaben des Anwenders zu vermeiden. Dieser Umstand kann beispielsweise durch unscharfes Darstellen der Anwenderschnittstelle (Englisch: "blurring") oder "Ausgrauen" veranschaulicht werden. Auch dieser Vorgang kann durch ein Klangzeichen begleitet werden.

Optional kann der Konfigurationsmodus (automatisch) verlassen werden, nachdem der ausgewählte Schwinger an seiner Zielposition angekommen ist. Alternativ kann der Konfigurationsmodus dadurch verlassen werden, dass der Anwender explizite Order gibt, das Tray zu schließen. Beispielsweise kann das Tray hierzu mittels einer Wischgeste und/oder einer eigens hierzu vorgesehenen Schaltfläche (X) von der Anzeigeoberfläche entfernt werden.

Insbesondere dann, wenn das Tray auf derjenigen Anzeigeoberfläche dargestellt wird, welche durch den ausgewählten Schwinger individualisiert werden soll, kann es vorteilhaft sein, nach der erfolgreichen Auswahl eines Schwingers das Tray (zeitweise) auszublenden, um die Position, an welcher der Schwinger gegebenenfalls zu platzieren ist, nicht durch das Tray zu verdecken. In diesem Fall kann unmittelbar nach der Platzierung des Schwingers an der Zielposition erneut das Tray eingeblendet werden, oder eine erneute explizite Aufrufgeste zur Darstellung des Trays erforderlich sein.

Um die Platzierung des Schwingers an der Zielposition optisch zu quittieren, kann hierbei eine optische Verkleinerung des Schwingers und/oder eine Entfernung eines virtuellen Schattens des Schwingers und/oder eine (gegebenenfalls erneute) Rotation/Schrägstellung des Schwingers und/oder ein Abspielen einer Animation bezüglich des Schwingers erfolgen. Auf diese Weise wird dem Anwender eine intuitiv verständliche Rückmeldung darüber gegeben, dass der Schwinger nun an der Zielposition verbleiben wird, bis eine separate Handlung zu dessen Entfernung vorgenommen wird.

Um zu verhindern, dass wichtige Informationen, welche auf der graphischen Anwenderschnittstelle dargestellt werden, versehentlich durch den Schwinger verdeckt werden, können sogenannte No-Go-Bereiche oder "verbotene Bereiche" auf der graphischen Anwenderschnittstelle vordefiniert sein und/oder durch den Anwender vordefiniert werden, an welchen der Schwinger nicht platzierbar ist. Entsprechendes gilt für Bedienelemente/Schaltflächen etc., welche auch nach Platzieren des Schwingers verwendbar bzw. sichtbar sein sollen, um die Anwenderschnittstelle nicht unpraktisch zu gestalten. Hierzu kann es dem Anwender verboten werden, die Zielposition innerhalb einer No-Go-Fläche zu wählen bzw. eine gewählte Zielposition innerhalb eines verbotenen Bereiches zur Platzierung des Schwingers zu verwenden. Vielmehr kann der Schwinger automatisch zurück in das Tray gezogen werden, wenn der Anwender die Platzierung in dem verbotenen Bereich vornehmen möchte. Alternativ kann der Schwinger unmittelbar neben dem aktuell angewählten verbotenen Bereich automatisch platziert werden, als würde er aus dem Bereich herausgleiten. Um den Anwender rechtzeitig darüber zu informieren, an welchen Positionen er den Schwinger platzieren kann und wo nicht, kann (z.B. nach Auswahl des Schwingers) eine graphische Visualisierung der verbotenen Bereiche und/oder der erlaubten Bereiche erfolgen. Der Anwender kann nun dafür Sorge tragen, dass seine Zielposition außerhalb eines verbotenen Bereiches liegt.

Optional kann der Anwender die Größe des ausgewählten Schwingers nach eigenem Ermessen verändern. Beispielsweise kann er hierzu während der Platzierung des Schwingers oder anschließend eine Zwei-Finger-Geste ausführen (Pinch oder Spread), sodass er quasi eine stufenlose Größenänderung und/oder Rotationspositionsänderung des Schwingers vornehmen kann.

Optional kann der Anwender den Konfigurationsmodus dadurch verlassen, dass er an eine Position neben dem Tray (sofern vorhanden) und neben dem Schwinger tippt.

Der Schwinger kann beispielsweise an eine neue Position gebracht werden, indem eine Langdruck- (Long Press) Geste bezüglich des Schwingers oder seines Ankerpunktes durchgeführt wird. Hierbei kann der Schwinger eine der oben genannten Animationen ausführen oder optische Änderungen hinnehmen, welche in Verbindung mit der Aufnahme/Entnahme aus dem Tray beschrieben worden sind. Hierbei kann auch eine X-Schaltfläche im Bereich des Schwingers dargestellt werden, beim Betätigen welcher der Schwinger entfernt bzw. wieder im Tray angeordnet wird. Beim Ablösen des Schwingers durch eine Long Press-Geste kann der Anwender durch eine Tipp-Geste an eine neue Zielposition und/oder Ausführen einer Wischgeste eine veränderte Zielposition für den Schwinger definieren. Auch das Ablösen kann durch ein Klangzeichen begleitet werden.

Die Ermittlung der Anwendereingabe (Entnahme des Schwingers, Definition der Zielposition etc.) kann beispielsweise mittels einer berührungssensitiven Oberfläche eines Touchscreens erfolgen. Insbesondere kann derjenige Bildschirm, welcher mittels des Schwingers individualisiert werden soll, selbst diese berührungssensitive Oberfläche (Digitizer) aufweisen. Alternativ oder zusätzlich kann eine Kamera eine Geste des Anwenders ermitteln. Mittels einer Kamera kann auch eine 3D-Geste derart ermittelt werden, dass die Auswahl des Schwingers durch eine erste Tippgeste (unter Kontakt mit der Oberfläche oder frei im Raum) ermittelt wird, eine Bewegung der Hand im Bereich vor der graphischen Anwenderschnittstelle (ohne Kontakt mit der Anwenderschnittstelle) eine unmittelbare Verschiebung des Schwingers an eine Projektionsposition der Hand nach sich zieht und das erneute Antippen der Zielposition (unter Kontakt mit der Oberfläche oder frei im Raum) mittels der Kamera ermittelt wird. Anstatt einer Kamera kann auch ein anderer optischer Sensor (z.B. ein Infrarot-Sensor) verwendet werden, um die 3D-Geste des Anwenders aufzulösen.

Nachfolgend werden weitere optionale Merkmale und Beispiele bezüglich der vorliegenden Erfindung ohne einschränkenden Charakter auf den Schutzbereich der beigefügten Ansprüche gemacht:
Wenn von einer Entnahme bzw. einer Positionierung des Schwingers die Rede ist, kann hierbei sowohl ein Flächenschwerpunkt des Schwingers selbst oder ein Aufhängungspunkt durch den Anwender manipuliert bzw. gefasst und bewegt werden. Entsprechendes gilt für die Zielposition, welche durch die Anwendergeste mit dem Schwinger selbst oder dem Aufhängungspunkt desselben in Kongruenz gebracht wird.

Je nachdem, welcher Art oder Natur der Schwinger ist, kann auch seine Interaktion mit dem Rest der graphischen Anwenderoberfläche bzw. dem restlichen Interieur des Fortbewegungsmittels gestaltet sein. Wird beispielsweise eine Discokugel als Schwinger verwendet, kann die Discokugel virtuell angestrahlt werden und somit Reflexionen auf der graphischen Anwenderoberfläche verursachen. Diese können naturgemäß mit der Discokugel schwingen, wenn sich diese bewegt. Zusätzlich können weitere Leuchtelemente im Interieur des Fortbewegungsmittels verwendet werden, um den optischen Effekt der Discokugel zu zitieren bzw. zu erweitern. Beispielsweise kann eine Ambientebeleuchtung des Fortbewegungsmittels derart angesteuert werden, dass zu den Bewegungen der Discokugel bzw. zum Lichteinfall auf die Discokugel passende Reflexionen bzw. Lichtmusterbewegungen simuliert werden. Insbesondere können einzeln ansteuerbare Leuchtmittel einer Ambientebeleuchtung in Form eines LED-Scripts dazu führen, dass helle und dunkle Lichtflecken das Armaturenbrett und/oder die Türinnenverkleidung zieren. Dieses Lichtmuster kann von einer Position und/oder Ausrichtung und/oder Drehrichtung und/oder Drehgeschwindigkeit des Schwingers bzw. der Discokugel abhängig sein. Beispielsweise können hierzu turnusmäßig einzelne Leuchtmittel der Ambientebeleuchtung abgeschaltet werden.

Als Beispiele für mögliche optische und virtuell-mechanisch Ausgestaltungen des Schwingers kommt eine Reihe bekannter Analoga aus der realen Welt infrage. Beispielsweise kann ein Duftbaum in Form eines (grünen) Tannenbaums als Schwinger verwendet werden, welcher üblicherweise an einem Innenspiegel des Fortbewegungsmittels platziert wird. Je nach Ausstattung des Fortbewegungsmittels kann eine Interaktion mit dem Duftbaum auch ein Parfümieren der Innenraumluft (gegebenenfalls mit einem korrespondierenden Duft) bewirken. Ein anderes Beispiel für einen Schwinger ist eine Discokugel (Spiegelfragment-Kugel), welche schwingen und insbesondere um sich selbst rotieren kann. Hierdurch ergeben sich viele Möglichkeiten zur optischen Zitierung des Lichtmusters der Discokugel, wie oben beschrieben worden ist. Alternativ kann ein Kinderschuh oder können zwei Kinderschuhe in verkleinerter Form als Pendel eingesetzt werden. Auch ein Fuchsschwanz oder ein Würfelpaar können als virtueller Schwinger ausgewählt werden. Insbesondere können jedem Schwinger vordefinierte Klangzeichen zugeordnet werden, welche bei einer Bewegung in sich oder Kollision mit der Fahrzeuginnenraumoberfläche (insbesondere Displayfläche bzw. das Display umgebende Blende) abgespielt wird und den Anwender in das schwingende Retroerlebnis einbezieht. Ein weiteres Beispiel für einen Schwinger stellt ein sog. Wackel-Dackel bzw. ein sog. Wackel-Elvis dar. Diese werden üblicherweise im Sockelbereich fixiert und tendieren bei Krafteinwirkung dazu, in einem oberen Bereich (Oberkörper bzw. Kopf) zu schwingen. Beispiele für akustische Klangzeichen stellen Musiksequenzen, Gejaule oder Gebell dar.

Eine Längenänderung des Schwingers und somit auch eine Veränderung seiner Eigenfrequenz kann beispielsweise durch Ausführen einer Zwei-Finger-Geste (unter Kontakt mit der Anwenderoberfläche oder frei im Raum ausgeführt) vorgenommen werden. Beispielsweise kann der Anwender hierzu mit dem einen Finger den Ankerpunkt des Schwingers und mit dem zweiten Finger den Schwinger selbst greifen / berühren und nun die Finger zueinander bewegen, um die Größe des Schwingers / Pendels zu verringern und die Finger auseinanderbewegen, um die Größe des Schwingers / Pendels zu erhöhen. Dies kann bereits im Tray und/oder nach Positionieren des Schwingers erfolgen. Selbstverständlich kann auch im Zuge einer Bewegung des Schwingers von dem Tray an seine Zielposition die Größe verändert werden.

Der Schwinger kann insbesondere dann den Spieltrieb des Anwenders anregen / befriedigen, indem er durch eine Anwenderinteraktion zum Schwingen angeregt wird. Mit anderen Worten kann der am Zielort platzierte Schwinger angetippt oder angeschubst werden, um in eine vordefinierte Richtung zu schwingen. Eine Schwingrichtung parallel zur Oberfläche der graphischen Anwenderoberfläche kann beispielsweise durch eine den Schwinger und/oder seinen Faden überstreichende Wischgeste erfolgen. Auch kann der Schwinger selbst ergriffen und mittels einer Wischgeste angehoben oder ausgelenkt werden, um anschließend nach einem Loslassen des Schwingers eine freie Schwingung auszuführen.

Sofern der Schwinger entfernt werden soll, kann eine Anwenderinteraktion bezüglich des Schwingers, insbesondere eine Longpress-Geste, ausgeführt werden, um den Schwinger abzulösen und beispielsweise zurück in das Tray zu bewegen. Alternativ kann nach der Longpress-Geste eine X-Schaltfläche im Bereich des Schwingers angezeigt werden, im Ansprechen auf das Betätigen welcher der Schwinger von der graphischen Anwenderoberfläche entfernt wird.

Besonders realistisch bzw. unterhaltsam wird der Schwinger dann, wenn er mit innerhalb der graphischen Anwenderoberfläche dargestellten Objekten interagiert. Beispielsweise kann er durch eine Ego-Position eines Fortbewegungsmittels oder andere Elemente in einer Kartendarstellung, einen Zeiger eines analogen bzw. virtuell analogen Anzeigeinstrumentes (Drehzahlmesser, Tachometer, o.ä.) angestoßen, ausgelenkt und/oder in Rotation versetzt werden. Auch kann ein virtuelles Kassettendeck ausgeschwenkt werden, um einen neuen Tonträger zu laden. Das Ausschwenken des Kassettendecks kann nun mit dem Schwinger derart interagieren, dass dieser in Schwingungen versetzt wird. Die Schwingungen des Schwingers können unterschiedliche Richtungskomponenten aufweisen. Bremsen und Beschleunigen kann den Schwinger in einer X-Richtung des Fahrzeugs schwingen lassen. Lenkbewegungen können den Schwinger in einer Y-Richtung schwingen lassen. Insbesondere das Anheben des Schwingers durch einen Finger des Anwenders oder das Herunterziehen des Schwingers mittels des Fingers des Anwenders können bei "elastischer Aufhängung" des Schwingers ein Tänzeln des Schwingers in Z-Richtung bewirken. Selbstverständlich können die vorgenannten Schwingrichtungen anteilig oder sämtlich zueinander überlagert erfolgen. Auch eine Tankfüllstandsanzeige, ein analog ausgeführter Fahrstufenanzeiger, eine analoge Uhr o.ä. können auf der Anzeigeeinrichtung virtuell dargestellt werden und virtuell mit dem virtuellen Schwinger in Wechselwirkung treten. Der Schwinger wirkt auf diese Weise besonders realistisch und bietet einen erhöhten Unterhaltungswert.

Sofern der Schwinger mit einer Oberfläche des Fahrzeuginterieurs kollidiert, kann dies mittels eines Sensors (z.B. berührungsempfindliche Oberfläche und/oder Kamera und/oder Infrarotsensor o.ä.) detektiert und mittels eines schwingerspezifischen Klangzeichens quittiert werden. Insbesondere kann auch diejenige Innenraumoberfläche, mit welcher der Schwinger kollidiert, das Klangzeichen (anteilig) definieren.

Gemäß einem zweiten Aspekt der vorliegenden Erfindung wird eine Anwenderschnittstelle zur Gestaltung einer graphischen Anwenderschnittstelle eines Fortbewegungsmittels vorgeschlagen. Mit anderen Worten kann die graphische Anwenderschnittstelle für ein Fortbewegungsmittel gemäß dem vorgenannten Verfahren individualisiert werden. Hierzu weist die Anwenderschnittstelle eine Auswerteeinheit mit einem Dateneingang und einem Datenausgang auf. Durch den Datenausgang ist die Anwenderschnittstelle eingerichtet, ein virtuell schwingfähiges Element (Schwinger) auf einer Anzeigeeinrichtung der Anwenderschnittstelle in einem Konfigurationsmodus darzustellen. Die Darstellung kann wie oben beschrieben bereits während der Auswahl oder nach der Auswahl eines Schwingers erfolgen. Mittels des Dateneingangs kann die Anwenderschnittstelle eine Anwendereingabe repräsentierend eine Zielposition auf der Anwenderschnittstelle ermitteln und im Ansprechen darauf mittels des Datenausgangs einen Schwinger an der Zielposition platzieren. Somit ist auch die erfindungsgemäße Anwenderschnittstelle eingerichtet, die Merkmale, Merkmalskombinationen und die sich aus diesen ergebenden Vorteile des erfindungsgemäßen Verfahrens derart ersichtlich in entsprechender Weise zu realisieren, dass zur Vermeidung von Wiederholungen auf die obigen Ausführungen verwiesen wird.

Gemäß einem dritten Aspekt der vorliegenden Erfindung wird ein Fortbewegungsmittel mit einer Anwenderschnittstelle gemäß dem zweitgenannten Erfindungsaspekt vorgeschlagen. Das Fortbewegungsmittel kann als PKW, Transporter, LKW, Motorrad, Luft- und/oder Wasserfahrzeug ausgestaltet sein. Auf diese Weise ergeben sich auch für das Fortbewegungsmittel dieselben Merkmale, Merkmalskombinationen und Vorteile wie oben beschrieben.

### Kurzbeschreibung der Figuren

Weitere Einzelheiten, Vorteile und Merkmale der vorliegenden Erfindung ergeben sich aus nachfolgender Beschreibung von Ausführungsbeispielen anhand der Zeichnung. Es zeigen:
- Fig. 1: eine schematische Darstellung eines Ausführungsbeispiels eines erfindungsgemäßen Fortbewegungsmittels bei der Ausführung eines erfindungsgemäßen Verfahrens;
- Fig. 2: eine Ansicht eines Bildschirms, auf welchem ein Tray zur Auswahl eines Schwingers dargestellt wird;
- Fig. 3: ein Ausführungsbeispiel einer Anwenderschnittstelle, in welcher ein erfindungsgemäßer Schwinger in Y-Richtung schwingt;
- Fig. 4: ein Ausführungsbeispiel einer erfindungsgemäßen Anwenderschnittstelle mit einer graphischen Anwenderoberfläche in Form eines Kombiinstrumentes, innerhalb welcher ein virtueller Schwinger mit einem virtuell-analogen Zeiger eines Drehzahlmessers interagiert;
- Fig. 5: eine Anwenderschnittstelle, auf welcher zur Platzierung eines Schwingers verbotene Bereiche dargestellt sind; und
- Fig. 6: ein Flussdiagramm veranschaulichend Schritte eines Ausführungsbeispiels eines erfindungsgemäßen Verfahrens zur Gestaltung einer graphischen Anwenderschnittstelle.

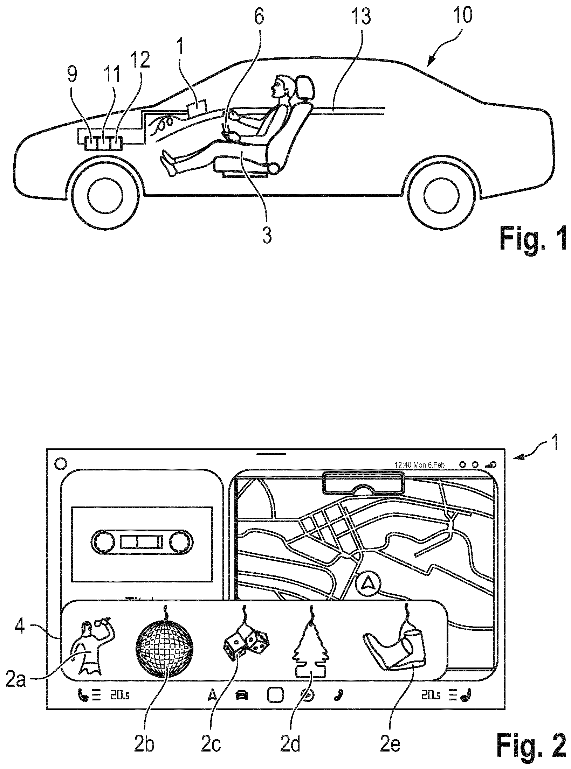

Fig. 1 zeigt eine schematische Darstellung eines Ausführungsbeispiels eines erfindungsgemäßen Fortbewegungsmittels 10 in Form eines PKWs, dessen Anwender 3 ein Smartphone 6 mitführt, mittels dessen er eine graphische Anwenderschnittstelle 1 in Form eines zentralen Informationsdisplays individualisieren möchte. Das Smartphone 6 ist drahtlos mit einer Auswerteeinheit 11 in Form eines Steuergerätes verbunden. Die Auswerteeinheit 11 weist einen Dateneingang 9 und einen Datenausgang 12 auf. Sowohl der Dateneingang 9 als auch der Datenausgang 12 sind über Kabel informationstechnisch mit der Anwenderschnittstelle 1 verbunden. Durch Auswahl eines auf dem Smartphone 6 dargestellten Schwingers in einem virtuellen Tray kann der Anwender 3 eine Zeigegeste ausführen, mittels welcher er eine Zielposition zur Platzierung des Schwingers auf der Anwenderschnittstelle 1 ausführt.

Das Fortbewegungsmittel 10 weist weiter eine Ambientebeleuchtung 13 auf, deren Leuchtmittel zur Zitierung von Reflexionen des Schwingers einzeln ansteuerbar sind.

Fig. 2 zeigt ein alternatives Ausführungsbeispiel einer graphischen Anwenderschnittstelle 1, auf welcher ein semitransparentes Tray 4 in Form eines Vordergrundfensters dargestellt wird. Das Tray 4 weist eine Vielzahl Schwinger 2a bis 2e auf. Die übrigen Bereiche außerhalb des Trays 4 sind unscharf dargestellt. Innerhalb des Trays 4 sind als Schwinger 2a bis 2e ein Wackel-Elvis, eine Discokugel, ein Würfel-Paar, ein Duftbaum sowie ein Kinderschuh-Paar auswählbar. Beispielsweise kann ein Anwender ein gewünschtes Exemplar antippen, im Ansprechen worauf das Tray verschwindet, und anschließend eine Wunsch-Position als Zielposition auf der graphischen Anwenderoberfläche 1 antippen, im Ansprechen worauf das Exemplar des Schwingers an der betreffenden Stelle angeordnet wird. Es kann hierbei vordefiniert sein oder durch den Anwender konfiguriert sein, ob die Zielposition dem Flächenschwerpunkt des Pendels / des Schwingers oder dem Ankerpunkt zugeordnet ist. In diesem Zusammenhang sei auch erwähnt, dass insbesondere der Ankerpunkt nicht notwendigerweise innerhalb der graphischen Anwenderoberfläche 1 gelegen sein muss, sondern die Platzierung des Flächenschwerpunktes des ausgewählten Schwingers an der Zielposition erscheinen kann, während der Aufhängungspunkt / Ankerpunkt insbesondere oberhalb des oberen Randes der graphischen Anwenderoberfläche 1 verortet werden kann.

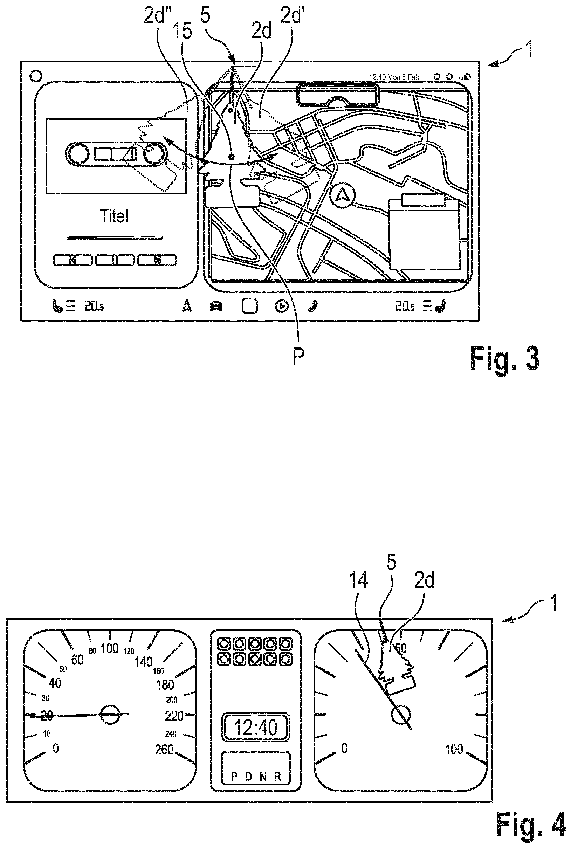

Fig. 3 zeigt ein Ausführungsbeispiel einer erfindungsgemäßen Anwenderschnittstelle mit einer graphischen Anwenderoberfläche 1 nach der Auswahl des Duftbaums 2d und Befestigung desselben im mittigen Bereich des oberen Randes der graphischen Anwenderoberfläche 1. Durch Überwachung der Lenkbewegungen und/oder der gefahrenen Geschwindigkeit und/oder von Signalen eines Beschleunigungssensors des Fortbewegungsmittels wird eine Querbeschleunigung (Beschleunigung in Y-Richtung) festgestellt. Im Ansprechen darauf wird der Duftbaum 2d wie durch einen Doppelpfeil D dargestellt, zwischen einer ersten Extremposition 2d' und 2d" hin und her schwingend animiert. Die Position des Schattens 16 des Duftbaums 2d kann bei einer Schwingung in X-Richtung des Fortbewegungsmittels (in die Zeichenebene hinein und heraus) im Abstand zum Duftbau 2d selbst bzw. zu seinem Flächenschwerpunkt 15 variieren, um eine virtuelle Entfernung von der Oberfläche der Kartendarstellung darzustellen.

Fig. 4 zeigt ein Ausführungsbeispiel einer erfindungsgemäßen Anwenderschnittstelle mit einer graphischen Anwenderoberfläche 1 in Form eines Retro-Kombi-Instruments, welches durch eine Matrix-Anzeige angezeigt wird. Die analog anmutenden Instrumente Tachometer und Drehzahlmesser weisen analoge Zeiger 14 auf. Der Anwender hat im Bereich des Drehzahlmessers einen Duftbaum 2d an einem Ankerpunkt 5 im Bereich des oberen Randes der graphischen Anwenderoberfläche 1 angeordnet. Der Duftbaum 2d hängt somit im Aktionsbereich des Zeigers 14 des Drehzahlmessers. Wenn der Zeiger 14 mit dem Duftbaum 2d kollidiert, kann der Zeiger 14 den Duftbaum 2d aus einer Ruhelage auslenken und der Duftbaum 2d kann bei Überschreiten einer vordefinierten Auslenkung und/oder bei Überlagerung mit einer vordefinierten Vibration in eine freie Schwingung übergehen bzw. abermals mit dem Zeiger 14 kollidieren. Entsprechendes gilt für den dargestellten Fahrstufenanzeiger oder den Tachometer.

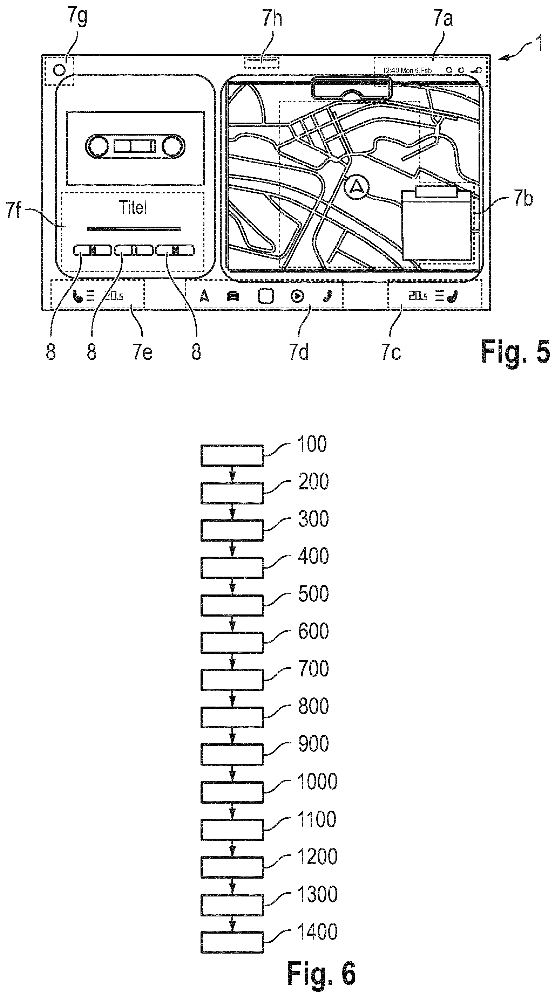

Fig. 5 zeigt verbotene Bereiche 7a bis 7h auf einem Ausführungsbeispiel einer erfindungsgemäß verwendbaren graphischen Anwenderschnittstelle 1 entsprechend Fig. 3. Beispielsweise werden durch die verbotenen Bereiche 7a bis 7h Bedienelemente 8, Bereiche einer digitalen Straßenkarte im Bereich der Ego-Position des Ego-Fortbewegungsmittels und andere wichtige Anzeigeelemente im Bereich der Kopfzeile sowie der Fußzeile gegen eine Verdeckung durch einen virtuellen Schwinger geschützt.

Fig. 6 zeigt ein Flussdiagramm veranschaulichend Schritte eines Ausführungsbeispiels eines erfindungsgemäßen Verfahrens zur Ausgabe einer Rückmeldung an einen Insassen über einen Fahrzustand eines Fortbewegungsmittels mittels einer grafischen Anwenderoberfläche. In einem ersten Schritt 100 wird ein Konfigurationsmodus gestartet, indem der Anwender ein Tray öffnet, innerhalb dessen eine Auswahl unterschiedlicher Exemplare von virtuellen Schwingern bereitgehalten werden. Im Ansprechen darauf folgt in Schritt 200 eine Darstellung der Vielzahl unterschiedlicher Schwinger innerhalb des Trays. In Schritt 300 wird eine vordefinierte Aufnahme-Anwendergeste bezüglich eines im Tray dargestellten Schwingers der Vielzahl Schwinger ermittelt. Die Aufnahme-Anwendereingabe kann beispielsweise eine Tippgeste und/oder eine Wischgeste umfassen. Im Ansprechen auf die Ermittlung der Aufnahme-Anwendergeste wird in Schritt 400 der Schwinger als Rückmeldung an den Anwender auf die Aufnahme-Anwendereingabe animiert. In Schritt 500 wird der Schwinger vom Tray in Richtung einer Zielposition verbracht. Hierbei wird der Schwinger fortwährend dargestellt, kann jedoch seine virtuelle Entfernung von der graphischen Anwenderoberfläche variieren. Dies ist insbesondere dann der Fall, wenn die Anwendergeste eine frei im Raum ausgeführte 3D-Geste umfasst. Durch eine Entfernung zwischen dem Schwinger und seinem Schattenwurf, eine Vergrößerung des Schwingers, eine Veränderung der virtuellen Lichtverhältnisse, innerhalb welcher der Schwinger erscheint, etc., kann der Eindruck weiter verstärkt werden. In Schritt 600 wird eine Anwendereingabe bezüglich des Schwingers ermittelt und im Ansprechen darauf in Schritt 700 eine Zielposition, welche der Anwender anzeigt, dahingehend überprüft, dass diese als für eine Platzierung des Schwingers erlaubt vordefiniert ist. Da die ausgewählte Zielposition erlaubt ist, wird in Schritt 800 der Schwinger an der Zielposition auf der graphischen Anwenderoberfläche 1 platziert. Der Schwinger ist nun platziert und die graphische Anwenderoberfläche kehrt automatisch von dem Konfigurationsmodus in einen Anzeige- und/oder Bedienmodus zurück. Während der Fahrt des Anwenders oder durch anderweitige Ereignisse wird anschließend in Schritt 900 ein Signal repräsentierend eine Beschleunigung und/oder eine Vibration und/oder eine Auslenkung des Fortbewegungsmittels ermittelt und im Ansprechen darauf sowie in Abhängigkeit einer Natur / Größe des Signals eine Schwingung des Schwingers in Schritt 1000 animiert. Die Ermittlung der Beschleunigung / Auslenkung / Vibration des Fortbewegungsmittels kann sensortechnisch erfolgen. Hierzu kann Hardware des Fortbewegungsmittels oder eines vom Anwender mitgeführten tragbaren Anwenderendgerätes verwendet werden. In Schritt 1100 wird aufgrund starker Amplituden des Schwingers eine virtuelle Kollision desselben mit einer Oberfläche des Fahrzeuginterieurs detektiert. Im Ansprechen darauf wird in Schritt 1200 eine mechanische Reaktion des Schwingers auf die Kollision simuliert. Beispielsweise kann der Schwinger von der Oberfläche abprallen oder durch die Oberfläche ausgelenkt werden. Alternativ oder zusätzlich kann eine sich bewegende Oberfläche (Zeiger, Regler, o.ä.) den virtuellen Schwinger auslenken. Hierbei kann auch ein Klangzeichen als akustische Rückmeldung auf die Kollision ausgegeben werden. In Schritt 1300 wird eine Anwenderinteraktion (antippen oder anschubsen) bezüglich des platzierten Schwingers ermittelt. Beispielsweise kann der Anwender die graphische Anwenderoberfläche im Bereich des Schwingers antippen, um eine Reaktion des Schwingers zu provozieren. Im Ansprechen darauf wird eine Schwingung des Schwingers animiert oder bei Ausführen einer Longpress-Geste in Schritt 1400 der Schwinger von der Zielposition gelöst. Mit anderen Worten wird in Schritt 1400 der Schwinger bzw. die graphische Anwenderoberfläche zurück in den Konfigurationsmodus versetzt, in welchem der Anwender den Schwinger zurück in das Tray schieben oder durch Antippen einer nun dargestellten X-Schaltfläche den Schwinger von der Oberfläche entfernen kann.

### Bezugszeichenliste

- 1: graphische Anwenderoberfläche
- 2 bis 2e: Schwinger
- 3: Anwender
- 4: Tray
- 5: Ankerpunkt
- 6: Smartphone
- 7a bis 7h: verbotener Bereich
- 8: Bedienelement
- 9: Dateneingang
- 10: Fortbewegungsmittel
- 11: Auswerteeinheit
- 12: Datenausgang
- 13: Ambientebeleuchtung
- 14: Zeiger
- 15: Flächenschwerpunkt
- 16: Schatten
- 100 bis 1400: Verfahrensschritte

## Patentansprüche

1. Verfahren zur Ausgabe einer Rückmeldung an einen Insassen (3) über einen Fahrzustand eines Fortbewegungsmittels (10) mittels einer graphischen Anwenderoberfläche (1) umfassend die Schritte:
- Darstellen (500) eines virtuell schwingfähigen Elements, nachfolgend "Schwinger (2)" genannt, auf der Anwenderoberfläche (1),
- Ermitteln (600) einer Anwendereingabe bezüglich des Schwingers (2) und im Ansprechen darauf
- Platzieren (800) des Schwingers (2) an einer Zielposition auf der graphischen Anwenderoberfläche (1), **gekennzeichnet durch** die Schritte
- Ermitteln (900) eines Signals repräsentierend eine Beschleunigung und/oder eine Vibration und im Ansprechen darauf sowie in Abhängigkeit des Signals
- Animieren (1000) einer Schwingung des Schwingers (2).

2. Verfahren nach Anspruch 1 weiter umfassend
- Starten (100) des Konfigurationsmodus,
- Darstellen (200) einer Vielzahl unterschiedlicher Schwinger (2a, 2b, 2c, 2d, 2e) in
- einer Ansicht und/oder
- einem Fenster und/oder
- einer virtuellen Schublade,
nachfolgend "Tray (4)" genannt,
- Ermitteln (300) einer vordefinierten Aufnahme-Anwendereingabe bezüglich eines im Tray (4) dargestellten Schwingers (2) der Vielzahl Schwinger (2a, 2b, 2c, 2d, 2e) und im Ansprechen darauf
- Animieren (400) des Schwingers (2) als Rückmeldung auf die Aufnahme-Anwendereingabe.

3. Verfahren nach Anspruch 2, wobei das Animieren
- eine Positionsveränderung des Schwingers (2) gegenüber dem Tray (4) und/oder
- eine optische Vergrößerung des Schwingers (2) und/oder
- eine Vergrößerung einer Entfernung eines virtuellen Schattens des Schwingers (2) vom Schwinger (2) selbst und/oder
- eine Rotation des Schwingers (2) und/oder
- ein Abspielen einer Animation bezüglich des Schwingers (2)
umfasst.

4. Verfahren nach Anspruch 2 oder 3 weiter umfassend
- Ermitteln einer Position und/oder Ausrichtung und/oder Drehrichtung und/oder Drehgeschwindigkeit des Schwingers (2) und in Abhängigkeit dessen
- Festlegen eines Leuchtmusters einer Ambientebeleuchtung (13) des Fortbewegungsmittels (10).

5. Verfahren nach einem der vorstehenden Ansprüche, wobei der Schwinger (2)
- als Duftbaum oder Discokugel oder Kinderschuh oder Fuchsschwanz oder Würfelpaar oder Wackel-Dackel oder Wackel-Elvis ausgestaltet ist und/oder
- virtuelle Lichtreflexionen auf die umgebende Anwenderoberfläche (1) wirft.

6. Verfahren nach einem der vorstehenden Ansprüche weiter umfassend
- Überprüfen (700) der Zielposition dahingehend, ob diese als für eine Platzierung des Schwingers (2) erlaubt oder nicht erlaubt vordefiniert ist und in Abhängigkeit eines Ergebnisses der Überprüfung
- Platzieren des Schwingers (2) an der Zielposition oder nicht.

7. Verfahren nach einem der vorstehenden Ansprüche, wobei die Anwendereingabe repräsentierend eine Zielposition
- eine Tippgeste und/oder
- eine Endposition einer Wischgeste
umfasst und die Zielposition insbesondere eine Ankerposition (5) für den Schwinger (2) oder im Wesentlichen einen Flächenschwerpunkt (15) des Schwingers (2) definiert.

8. Verfahren nach einem der vorstehenden Ansprüche weiter umfassend
- Ermitteln (1300) einer Anwenderinteraktion bezüglich des platzierten Schwingers (2) und im Ansprechen darauf
- Animieren einer Schwingung des Schwingers (2) oder
- Entfernen (1400) des Schwingers (2) von der Zielposition.

9. Verfahren nach einem der vorstehenden Ansprüche weiter umfassend
- Ermitteln (1100) einer virtuellen Kollision zwischen dem Schwinger (2) und einem Anzeigeelement (14) und im Ansprechen darauf
- Simulieren (1200) einer mechanischen Reaktion des Schwingers (2) auf die Kollision.

10. Verfahren nach einem der vorstehenden Ansprüche, wobei im Konfigurationsmodus keine Anwendergesten bezüglich anderweitiger Elemente der Anwenderoberfläche (1) zugelassen werden.

11. Verfahren nach einem der vorstehenden Ansprüche weiter umfassend
- Ermitteln einer virtuellen Schwingbewegung mit einer vordefinierten Amplitude in einer x- oder y-Richtung des Fortbewegungsmittels (10) und im Ansprechen darauf
- Ausgeben eines Klangzeichens im Ansprechen auf das Erreichen der vordefinierten Amplitude durch den Schwinger (2).

12. Verfahren nach einem der vorstehenden Ansprüche, wobei das Ermitteln der Anwendereingabe mittels
- einer berührungssensitiven Oberfläche und/oder
- einer Kamera und/oder
- eines Infrarot-Sensors
erfolgt.

13. Verfahren nach einem der vorstehenden Ansprüche, wobei die Anzeige
- ein Kombiinstrument und/oder
- ein zentrales Anzeigebedienteil
umfasst.

14. Anwenderschnittstelle zur Gestaltung einer graphischen Anwenderoberfläche (1) eines Fortbewegungsmittels (10) umfassend:
- einen Dateneingang (9),
- einen Datenausgang (12) und
- eine Auswerteeinheit (11), wobei:
- die Anwenderschnittstelle eingerichtet ist, mittels des Datenausgangs (12) ein virtuell schwingfähiges Element, nachfolgend "Schwinger (2)" genannt, auf der graphischen Anwenderoberfläche (1) in einem Konfigurationsmodus darzustellen,
- mittels des Dateneingangs (9) eine Anwendereingabe repräsentierend eine Zielposition auf der Anwenderoberfläche (1) zu Ermitteln und im Ansprechen darauf
- mittels des Datenausgangs (12) den Schwinger (2) an der Zielposition zu platzieren, , **gekennzeichnet dadurch, dass** die Anwenderschnittstelle weiter eingerichtet ist,
- mittels des Dateneingangs (9) ein Signal repräsentierend eine Beschleunigung und/oder eine Vibration zu ermitteln und im Ansprechen darauf sowie in Abhängigkeit des Signals
- mittels des Dateneingangs (12) eine Schwingung des Schwingers (2) zu animieren.

15. Fortbewegungsmittel umfassend eine Anwenderschnittstelle nach dem vorstehenden Anspruch 14 14.

## Claims

1. Method for outputting feedback to an occupant (3) about a driving state of a means of transport (10) by means of a graphical user display (1), comprising the steps of:
- displaying (500) an element capable of virtual oscillation, hereinafter referred to as "oscillator" (2), on the user display (1),
- ascertaining (600) a user input with respect to the oscillator (2) and, in response thereto,
- placing (800) the oscillator (2) at a target position on the graphical user display (1), **characterized by** the steps of
- ascertaining (900) a signal representing an acceleration and/or a vibration and, in response thereto and depending on the signal,
- animating (1000) an oscillation of the oscillator (2).

2. Method according to claim 1, further comprising
- starting (100) the configuration mode,
- displaying (200) a plurality of different oscillators (2a, 2b, 2c, 2d, 2e) in
- a view and/or
- a window and/or
- a virtual drawer,
hereinafter referred to as "tray" (4),
- ascertaining (300) a predefined user selection input with respect to an oscillator (2) of the plurality of oscillators (2a, 2b, 2c, 2d, 2e) that is displayed in the tray (4) and, in response thereto,
- animating (400) the oscillator (2) as feedback on the user selection input.

3. Method according to claim 2, wherein the animating comprises
- changing the position of the oscillator (2) relative to the tray (4) and/or
- visually enlarging the oscillator (2) and/or
- enlarging a distance of a virtual shadow of the oscillator (2) from the oscillator (2) itself and/or
- rotating the oscillator (2) and/or
- playing an animation with respect to the oscillator (2).

4. Method according to claim 2 or 3, further comprising
- ascertaining a position and/or orientation and/or direction of rotation and/or speed of rotation of the oscillator (2) and depending thereon
- defining a light pattern of an ambient lighting (13) of the means of transport (10).

5. Method according to any of the preceding claims, wherein the oscillator (2)
- is designed as a tree-shaped air freshener or disco ball or child's shoe or fox tail or pair of dice or nodding dog or wobbly Elvis and/or
- projects virtual light reflections onto the surrounding user display (1).

6. Method according to any of the preceding claims, further comprising
- checking (700) the target position as to whether it is predefined as allowed or not allowed for a placement of the oscillator (2) and, depending on a result of the check,
- placing the oscillator (2) at the target position or not.

7. Method according to any of the preceding claims, wherein the user input representing a target position comprises
- a tap gesture and/or
- an end position of a swipe gesture
and the target position defines in particular an anchor position (5) for the oscillator (2) or substantially a centroid (15) of the oscillator (2).

8. Method according to any of the preceding claims, further comprising
- ascertaining (1300) a user interaction with respect to the placed oscillator (2) and, in response thereto,
- animating an oscillation of the oscillator (2) or
- removing (1400) the oscillator (2) from the target position.

9. Method according to any of the preceding claims, further comprising
- ascertaining (1100) a virtual collision between the oscillator (2) and a display element (14) and, in response thereto,
- simulating (1200) a mechanical reaction of the oscillator (2) to the collision.

10. Method according to any of the preceding claims, wherein, in the configuration mode, no user gestures with respect to other elements of the user display (1) are permitted.

11. Method according to any of the preceding claims, further comprising
- ascertaining a virtual oscillatory motion having a predefined amplitude in an x or y direction of the means of transport (10) and, in response thereto,
- outputting a sound signal in response to the oscillator (2) reaching the predefined amplitude.

12. Method according to any of the preceding claims, wherein the user input is ascertained by means of
- a touch-sensitive display and/or
- a camera and/or
- an infrared sensor.

13. Method according to any of the preceding claims, wherein the display comprises
- an instrument cluster and/or
- a central display operating device.

14. User interface for designing a graphical user display (1) of a means of transport (10), comprising:
- a data input (9),
- a data output (12) and
- an evaluation unit (11), wherein:
- the user interface is designed, by means of the data output (12), to display an element capable of virtual oscillation, hereinafter referred to as "oscillator" (2), on the graphical user display (1) in a configuration mode,
- to ascertain, by means of the data input (9), a user input representing a target position on the user display (1) and, in response thereto,
- to place the oscillator (2) at the target position by means of the data output (12), **characterized in that** the user interface is further designed
- to ascertain, by means of the data input (9), a signal representing an acceleration and/or a vibration, and, in response thereto and depending on the signal,
- to animate an oscillation of the oscillator (2) by means of the data input (12).

15. Means of transport comprising a user interface according to the preceding claim 14.

## Revendications

1. Procédé permettant de transmettre à un occupant (3) un retour d'informations concernant un état de conduite d'un moyen de déplacement (10) au moyen d'une interface utilisateur (1) graphique, comprenant les étapes consistant à :
- représenter (500) un élément virtuel oscillant, ci-après dénommé « élément oscillant (2) », sur l'interface utilisateur (1),
- déterminer (600) une entrée utilisateur relative à l'élément oscillant (2) et, en réponse à celle-ci,
- positionner (800) l'élément oscillant (2) à un emplacement cible sur l'interface utilisateur (1) graphique, **caractérisé par** les étapes consistant à
- déterminer (900) un signal représentant une accélération et/ou une vibration, et en réponse à celui-ci ainsi qu'en fonction du signal,
- animer (1000) une oscillation de l'élément oscillant (2).

2. Procédé selon la revendication 1, comprenant en outre
- le démarrage (100) du mode de configuration,
- la représentation (200) d'une pluralité d'éléments oscillants (2a, 2b, 2c, 2d, 2e) différents dans
- une projection et/ou
- une fenêtre et/ou
- un tiroir virtuel,
ci-après dénommé « plateau (4) »,
- la détermination (300) d'une entrée utilisateur de sélection prédéfinie relative à un élément oscillant (2) affiché dans le plateau (4) de la pluralité d'élément oscillants (2a, 2b, 2c, 2d, 2e) et, en réponse à celle-ci,
- l'animation (400) de l'élément oscillant (2) en tant que retour d'informations suite à la saisie utilisateur de sélection.

3. Procédé selon la revendication 2, dans lequel l'animation comprend
- un changement de position de l'élément oscillant (2) par rapport au plateau (4) et/ou
- un agrandissement optique de l'élément oscillant (2) et/ou
- une augmentation d'une distance entre une ombre virtuelle de l'élément oscillant (2) et l'élément oscillant (2) lui-même et/ou
- une rotation de l'élément oscillant (2) et/ou
- une lecture d'une animation relative à l'élément oscillant (2).

4. Procédé selon la revendication 2 ou 3, comprenant en outre
- la détermination d'une position et/ou d'une orientation et/ou d'un sens de rotation et/ou d'une vitesse de rotation de l'élément oscillant (2) et, en fonction de ceux-ci,
- la définition d'un profil d'éclairage d'un éclairage d'ambiance (13) du moyen de déplacement (10).

5. Procédé selon l'une des revendications précédentes, dans lequel l'élément oscillant (2)
- est conçu sous la forme d'un diffuseur de parfum ou d'une boule disco ou d'une chaussure d'enfant ou d'une scie égoïne ou d'une paire de dés ou d'un teckel à bascule ou d'un Elvis à bascule, et/ou
- projette des reflets lumineux virtuels sur l'interface utilisateur (1) environnante.

6. Procédé selon l'une des revendications précédentes, comprenant en outre
- la vérification (700) de la position cible afin de déterminer si celle-ci est prédéfinie comme autorisée ou non autorisée pour le positionnement de l'élément oscillant (2), et en fonction du résultat de la vérification,
- le positionnement ou non de l'élément oscillant (2) à la position cible.

7. Procédé selon l'une des revendications précédentes, dans lequel la saisie utilisateur représentant une position cible comprend
- un geste de tapotement et/ou
- une position finale d'un geste de balayage
et la position cible définit en particulier une position d'ancrage (5) pour l'élément oscillant (2) ou, sensiblement, un centre de gravité de surface (15) de l'élément oscillant (2).

8. Procédé selon l'une des revendications précédentes, comprenant en outre
- la détermination (1300) d'une interaction utilisateur relative à l'élément oscillant (2) mis en place et, en réponse à celle-ci,
- l'animation d'une oscillation de l'élément oscillant (2) ou
- le retrait (1400) de l'élément oscillant (2) de sa position cible.

9. Procédé selon l'une des revendications précédentes, comprenant en outre
- la détermination (1100) d'une collision virtuelle entre l'élément oscillant (2) et un élément d'affichage (14), et, en réponse à celle-ci,
- la simulation (1200) d'une réaction mécanique de l'élément oscillant (2) à la collision.

10. Procédé selon l'une des revendications précédentes, dans lequel, dans le mode de configuration, aucun geste utilisateur relatif à d'autres éléments de l'interface utilisateur (1) n'est autorisé.

11. Procédé selon l'une des revendications précédentes, comprenant en outre
- la détermination d'un mouvement oscillatoire virtuel comportant une amplitude prédéfinie dans une direction x ou y du moyen de déplacement (10), et, en réponse à celui-ci,
- l'émission d'un signal sonore en réponse à l'atteinte de l'amplitude prédéfinie par l'élément oscillant (2).

12. Procédé selon l'une des revendications précédentes, dans lequel la détermination de la saisie utilisateur est effectuée au moyen
- d'une surface tactile et/ou
- d'une caméra et/ou
- d'un capteur infrarouge.

13. Procédé selon l'une des revendications précédentes, dans lequel l'affichage comprend
- un combiné d'instruments et/ou
- un module central d'affichage et de commande.

14. Interface utilisateur pour la conception d'une interface utilisateur (1) graphique d'un moyen de déplacement (10), comprenant :
- une entrée de données (9),
- une sortie de données (12) et
- une unité d'évaluation (11), dans laquelle :
- l'interface utilisateur est configurée pour représenter, au moyen de la sortie de données (12), un élément virtuel oscillant, ci-après dénommé « élément oscillant (2) », sur l'interface utilisateur (1) graphique dans un mode de configuration,
- déterminer, à l'aide de l'entrée de données (9), une saisie utilisateur représentant une position cible sur l'interface utilisateur (1) et, en réponse à celle-ci,
- positionner l'élément oscillant (2) à la position cible à l'aide de la sortie de données (12), **caractérisé en ce que** l'interface utilisateur est en outre configurée pour
- déterminer, à l'aide de l'entrée de données (9), un signal représentant une accélération et/ou une vibration, et, en réponse à celui-ci ainsi qu'en fonction du signal,
- animer une oscillation de l'élément oscillant (2) à l'aide de l'entrée de données (12).

15. Moyen de déplacement comprenant une interface utilisateur selon la revendication 14 précédente.
